# EUROPEAN PATENT APPLICATION

(11) **EP 4 696 396 A1**
(43) Date of publication of application: **18.02.2026**
(21) Application number: 24020265.5
(22) Date of filing: 12.08.2024
(51) Int. Cl.: B01D 53/04, B01D 53/26, C10L 3/10

(54) **METHOD AND APPARATUS FOR ADSORPTIVE TREATMENT OF A FEED GAS STREAM**

(71) Applicant: Linde GmbH, 82049 Pullach (DE)
(72) Inventor: Berg, Markus, 82049 Pullach (DE); Hochenauer, Michael, 82049 Pullach (DE)
(74) Representative: Lu, Jing

(57) **Abstract**

A method for adsorptively treating a process gas stream (1) comprising an adsorbable component using a plurality of adsorber vessels (A, B) is proposed, each of the adsorber vessels (A, B) comprising an adsorbent therein and being alternatingly operated in an adsorption mode and a regeneration mode, wherein the method comprises, for each of the adsorber vessels (A, B), passing the process gas stream (1) through the adsorption vessel (A, B) in the adsorption mode, passing a regeneration gas stream (2) through the adsorption vessel (A, B) in the regeneration mode, and forming a heating gas stream (4) and combining the heating gas stream (4) with the regeneration gas stream (2) within the adsorption vessel (A, B) in the regeneration mode. A corresponding apparatus (100) is also proposed herein.

## Description

The present invention relates to a method for adsorptive treatment of a feed gas stream and to a corresponding apparatus.

### Field

Temperature swing adsorption (TSA) is, as generally known, an adsorptive process for the separation or purification of gases or gas mixtures wherein the adsorbent is regenerated using thermal energy. Such a process can, for example, be used to adsorptively remove water from a carbon dioxide feed gas stream, in order to be able to perform a cryogenic treatment thereafter, or allow further compression, e.g. for carbon dioxide sequestration and/or as a part of carbon capture processes. The adsorbent is typically provided in a plurality of adsorbent vessels of an apparatus referred to as an "adsorber" herein, which are, alternatingly and offset against each other in time, subjected to a regeneration.

During the regeneration, which includes heating of the adsorbent, condensates may form on still colder regions of the adsorber. Condensates, however, can damage the adsorbent itself as well as cause reactive attacks, such as an acid attack in combination with an atmosphere containing carbon dioxide. Damage to the adsorbent reduces its service life, i.e. the adsorbent must be replaced more frequently. Reactive attacks can be mitigated by the choice of a suitable material, such as stainless steel.

For reducing condensation, accompanying heating of certain parts of equipment to avoid temperature or heat loss and the associated condensation is known. Hot water, steam, thermal oils or electric heaters may be used for this. However, accompanying heating from outside is only suitable for a static state, as the available energy transfer is not sufficient to quickly heat the equipment at risk significantly.

### Summary

Against this background, methods and apparatus including the features of the independent claims are proposed. Embodiments are the subject of the independent claims and of the description that follows.

The method for adsorptively treating a process gas stream comprising an adsorbable component proposed herein uses a plurality of adsorber vessels, each of the adsorber vessels comprising an adsorbent therein and being alternatingly operated in an adsorption mode and a regeneration mode, wherein the method comprises, for each of the adsorber vessels, passing the process gas stream through the adsorption vessel in the adsorption mode, passing a regeneration gas stream through the adsorption vessel in the regeneration mode, and forming a heating gas stream and combining the heating gas stream with the regeneration gas stream within the adsorption vessel in the regeneration mode, particularly before the regeneration gas stream leaves the adsorption vessel and at a position downstream of an bed of an adsorbent material within the adsorption vessel.

In certain embodiments, the process gas stream may be passed through the adsorption vessel in the adsorption mode in a direction from top end to a bottom end or vice versa and the regeneration gas stream may be passed through the adsorption vessel in the regeneration mode in the same direction or in an opposite direction. It may be particularly advantageous if the regeneration gas stream is passed through the adsorption vessel from top to bottom in the regeneration mode as this may help reduce corrosion when the adsorption vessel is arranged vertically or essentially vertically with respect to its longitudinal axis.

Embodiments as proposed herein avoid condensation and the associated disadvantage of damaging the adsorbent. A cost-intensive choice of adsorbers, piping and instrumentation (fittings) made of stainless steel can be avoided. A key aspect of adsorbent material regeneration is the bake-out, wherein a temperature front passes through the adsorber. At the time of release (desorption) of the adsorbed component, such as water, all equipment downstream is still colder in conventional methods and therefore the point for cooling, falling below the dew or condensation point. Solutions overcoming this problem as proposed herein include a modification of the saturated gas leaving the adsorbent so that the dew point remains is well below the temperature of the downstream equipment.

In certain embodiments as disclosed herein, the regeneration gas stream and the heating gas stream are formed from a part of the process gas stream downstream of the adsorption vessels. That is, an advantageous source of gas depleted in the adsorbable component, such as water, for the regeneration of the adsorbent is used in such embodiments. This reduces the relative content of the adsorbable component and, therefore, the danger of condensation.

A crucial aspect of embodiments as proposed herein is the direct heating of the saturated regeneration gas leaving the adsorbent with preheated and dry regeneration gas. The additional heating (partial flow from the main regeneration gas stream) includes that the gas is heated directly, the dew point is lowered by adding dry regeneration gas, and the critical areas of the adsorber are preheated by suitable distribution, such that a direct contact of the critical surfaces with the saturated regeneration gas (not yet combined with the heating gas stream) is avoided.

In some embodiments as proposed herein, the adsorbable component is water and the process gas stream further comprises at least one non-absorbable component selected from the group of nitrogen, oxygen, hydrogen, one or more hydrocarbons, carbon monoxide, carbon dioxide or combinations thereof. Embodiments as proposed herein are, therefore, applicable to various different gas treatment methods.

In some embodiments as proposed herein, said forming the heating gas stream and combining the heating gas stream with the regeneration gas stream is performed only in a phase of the regeneration mode in which a temperature at or adjacent to the end of the adsorption vessels at which the regeneration gas stream leaves the adsorption vessels is determined to be below a threshold temperature. This allows to save product gas, which may be used as the heating gas, in cases where no considerable condensation is required.

In embodiments as proposed herein, the threshold temperature is selected on the basis of the selected adsorbent material as well as regeneration conditions such as pressure.

The temperature can be in a wide range from approx. 40 to 100 °C. This is particularly the case if the adsorbable component is water which is to be removed.

In some embodiments as proposed herein, gas used to form the regeneration gas stream and the heating gas stream or a part thereof is heated by using a regeneration gas heater. The very same heater can be used in order to save equipment.

In some embodiments as proposed herein, the heating gas stream is increased in its amount and/or in its temperature during at least a part of the regeneration mode. This copes with the increasing content of the adsorbable, and condensable, component contents during regeneration.

In some embodiments as proposed herein, said combining the heating gas stream with the regeneration gas stream is performed in a space of the adsorber vessels downstream of an adsorbent bed. Embodiments as proposed herein are therefore particularly suitable to target certain, particularly vulnerable, parts.

In some embodiments as proposed herein, said apparatus contains at least one metallic component formed by a material other than a stainless steel which is contacted by the regeneration gas stream and the heating gas stream downstream of the adsorber vessels. In embodiments as proposed herein, therefore, less expensive and easier to handle materials can be used.

In some embodiments as proposed herein, at each point of time one of the adsorber vessels is operated in the adsorption mode. This allows for a continuous adsorption operation as a whole.

In certain embodiments, the heating gas stream is supplied to an inner space of the adsorber vessels using a plurality of injection lances comprising a plurality of openings, each of the injection lances being arranged at an angle with respect to a longitudinal axis of the adsorber vessels. This allows for an increased targeted application of the heating gas to regions wherein a higher risk of condensation occurs. Particularly, the injection lances may each be a straight tube and, in a projection view to a plane perpendicular to the longitudinal axis. The injection lances may diverge from each other or be oriented in a centripetal arrangement.

The apparatus for adsorptively treating a process gas stream comprising an adsorbable component proposed herein comprises a plurality of adsorber vessels, each of the adsorber vessels comprising an adsorbent therein and being configured alternatingly operated in an adsorption mode and a regeneration mode. The apparatus is configured, for each of the adsorber vessels, to pass the process gas stream through the adsorption vessel, in the adsorption mode, to pass a regeneration gas stream through the adsorption vessel, in the regeneration mode, and to form a heating gas stream and combine the heating gas stream within the adsorption vessel in the regeneration mode.

As to further details and advantages of such an apparatus, reference is made to the explanations above in regarding the method proposed herein and its different embodiments. Particularly, such an apparatus may, in embodiments as proposed herein, comprise means adapted to perform a method according to any of the embodiments as discussed herein.

### Figures

Embodiments as disclosed herein will now be described, by way of example only, with reference to accompanying drawings, in which
Figure 1 illustrates an apparatus according to an embodiment; and
Figure 2 is a partial view of an adsorber vessel according to an embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

As mentioned at the outset, temperature swing adsorption is a process generally known in the field of gas treatment. Temperature swing adsorption is used, for example, for waste gas purification or for processing gas mixtures such as natural or synthesis gas. Other gas mixtures can also be separated in a corresponding manner by means of thermal swing adsorption, for example gas mixtures such as biogas or waste gases from chemical or physical gas scrubbing processes such as rectisol or amine scrubbing, provided that their composition is suitable for the separation. The present invention is not limited to the use of certain adsorbents or gas mixtures, provided that they fall under the scope of the independent claims.

Generally, embodiments as proposed herein are usable in all applications where a gas mixture comprises components that may be removed by adsorption processes, which are referred to as "adsorbable components" herein. Only for illustration purposes, the further description will focus on gas mixtures rich in carbon dioxide and containing water as an adsorbable component. This particularly serves the purpose of being able to subsequently subject the carbon dioxide to a low-temperature treatment without the danger of freezing water which could block equipment.

To refer to a different example, the purification of air to be processed in a cryogenic air separation unit, including a removal of water and carbon dioxide by adsorption using zeolithes, is described in H.-W. Haring (Ed.), Industrial Gases Processing, Wiley-VCH, 2006 , particularly Section 2.2.5, "Cryogenic Rectification".

Temperature swing adsorption makes use of the temperature dependence of adsorption processes. For adsorbing certain components of a gas mixture, the adsorbable components referred to herein, a stream formed from the gas mixture, which herein is also referred to as a process gas stream, is passed over an adsorbent accommodated in a container or "adsorption vessel".

Adsorption is performed at a lower temperature level in a phase also referred herein to as an "adsorption mode" hereinbelow with respect to the specific adsorption vessel. As a consequence of the adsorption, the adsorbent is loaded with the adsorbing components to be separated from adsorption gas stream. In a subsequent phase, the adsorbent is started to be regenerated by desorbing the adsorbed components by heating, i.e. by introducing thermal energy into the adsorbent. This phase is also referred herein to as the "regeneration mode".

After the heating phase, to complete regeneration, the adsorption vessel may be cooled, in order to be prepared for being operated in a subsequent adsorption phase. In the context of the description herein, this is referred to as a "cooling mode" The cooling mode may be considered to represent a part of the regeneration mode or not, and if, herein, reference is made to a regeneration gas stream being passed through an adsorber vessel "in a regeneration mode", this does not necessary mean that this is done throughout the entire regeneration mode.

For the continuous operation of a temperature swing adsorption apparatus, at least two adsorption vessels are required, which are operated in the adsorption mode and in the regeneration mode in a timely offset manner, wherein at each point of time at least one of the vessels is in adsorption mode, such that the feed gas stream to be treated may always be passed through at least one of the adsorption vessels. This does not necessarily mean that there are only phases in which exactly one adsorption vessel is used for adsorption, when more than two adsorption vessels are present. Rather, phases may be present in which two or more adsorption vessels, particularly in larger arrangements, can be operated in an adsorption mode. The adsorption gas stream may thus be subsequently passed through different adsorption vessels, allowing the other adsorption vessels to be regenerated.

Temperature swing adsorption can be used in particular in systems with components that have high adsorption affinities. The durations of the explained phases, particularly the adsorption phase, are usually several hours. Temperature swing adsorption is generally used to remove low concentrated components in gas mixtures and is typically less suitable for removing higher concentrated components.

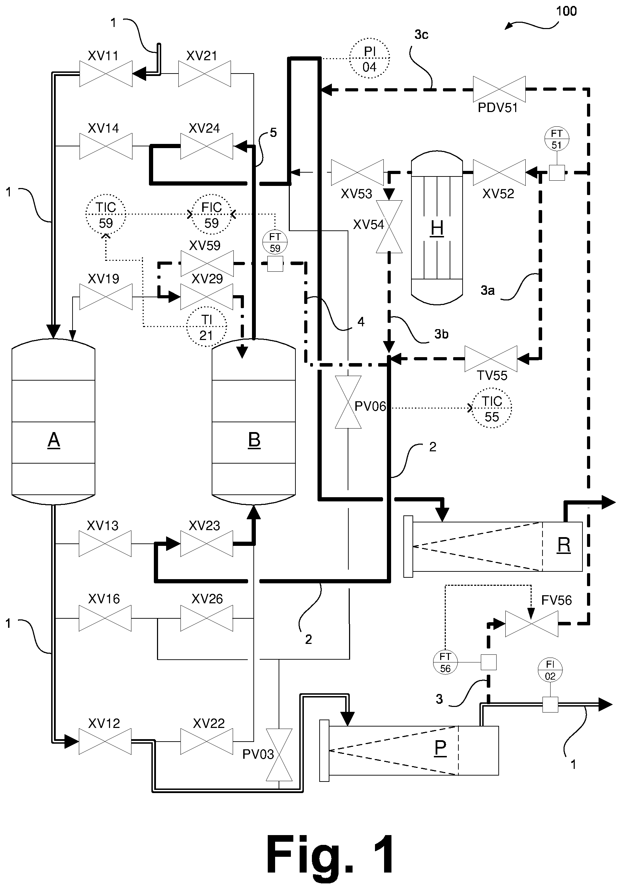

In Figure 1, an apparatus 100 according to an embodiment disclosed herein is schematically illustrated.

Apparatus 100 comprises a first adsorbent vessel A, a second adsorbent vessel B, a product filter P, a regeneration gas filter R, and a regeneration gas heater H, as well as a plurality of on/off control valves referred to with prefixes XV and a plurality of pressure and flow control valves referred to with prefixes PV and FV, and a proportional pressure valve PDV51. Flow indicators Fl, flow transmitters FT, pressure indicators PI, temperature indicators TI, as well as corresponding controllers TIC, FIC, are indicated as customary in the field.

Apparatus 100 is shown, in Figure 1, in a state of operation wherein a process gas stream 1, which is, in the example illustrated, a carbon dioxide stream containing water, is passed through vessel A, and wherein a regeneration gas stream 2 is passed through vessel B. The process gas stream 1 is additionally indicated by double arrows while the regeneration gas stream 2 is additionally indicated by bold, solid arrows. In a subsequent state of operation, the operation is reversed. The state of operation shown in Figure 1 includes opening valves XV11, XV24, XV29, XV23, and XV12, while valves XV21, XV14, XV19, XV13, and XV22 are closed. A subsequent state of operation may include a reversed switching state of these valves.

In the state of operation shown in Figure 1, process gas stream 1 is passed via valve XV11 through vessel A and is then passed via valve XV12 to product filter P before being removed from the apparatus 100 as a dry product. A partial stream 3 of the dry product, whose amount is regulated by valve FV56 on the basis of a flow transmitted by flow transmitter FT, is used to form regeneration gas stream 2, as indicated by a bold dashed arrow. A degree of heating may include adjusting partial streams 3a, 3b of partial stream 3 passed through, and bypassing, regeneration gas heater H on the basis of a signal of flow transmitter FT51 and/or using temperature indicator controller TIC55. The heated gas is then used to form regeneration gas stream 2 which is passed in a countercurrent direction in relation to process gas stream 1 via valve XV23 through vessel B.

In the embodiment shown in Figure 1, the heated gas is also used to form a heating stream 4 which is used to preheat the downstream components of vessel A and further downstream equipment and which is passed through valves XV59 and XV29 in the example illustrated, as indicated with a dash-dotted line. Heating stream 4 may be provided on the basis of temperature and flow indicating controllers TIC59 and FIC59 which may operate on the basis of a signal of temperature indicator TI21 and flow transmitter FT59.

A stream 5 withdrawn from vessel B is passed through valve XV24 where it is combined with a partial stream 3c which, as the case may be, may be formed in certain circumstances from partial stream 3 passed through proportional pressure valve PDV51 and the signal of pressure indicator PI04. A combined stream may then be passed through regeneration gas filter R before being recycled to a position upstream of being passed out of the apparatus 100.

For certain operating conditions, bypass lines not specifically indicated and comprising valves such as PV03 and PV06 are provided whose function becomes directly evident to the skilled person from the drawing in Figure 1.

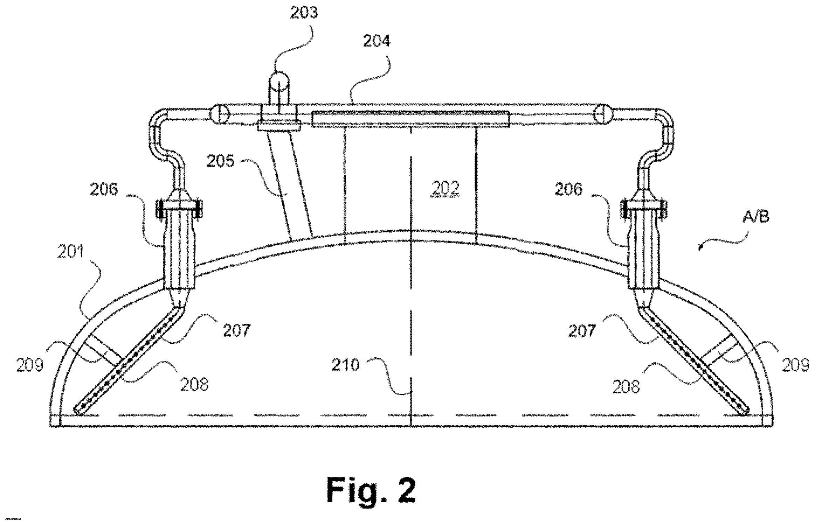

Figure 2 is a partial view of a vessel, such as vessel A or B as shown in Figure 1, according to an embodiment proposed herein.

Vessel A or B comprises an outer shell 201, e.g. made from a non-stainless steel. A main port 202 is provided to feed gas to an inner space of vessel A or B in an adsorption mode, such as a process gas stream 1 shown in Figure 1, and to withdraw a regeneration gas stream 3 combined with a heating gas stream, such as heating gas stream 4 as shown in Figure 1, in regeneration mode.

To feed a heating gas stream, such as heating gas stream 4 shown in Figure 1, into an upper region of the vessel A or B shown in Figure 2, a feed line 203 is provided which is fluidly connected with a header 204 which may be supported by a support beam 205 at the shell 201. Header 204 may supply a plurality of inlet lines 206 which are passed through shell 201 using flanges or other structures. In Figure 2, two such inlet lines 206 are provided but embodiments as shown herein are not limited to such an arrangement. In the inner space of shell 201, each of the inlet lines is connected to angularly arranged feeding lances 207 comprising a plurality of outlet openings, which are supported by supports 209. A longitudinal axid of vessel A or B is indicated with reference numeral 210.

In certain embodiments, the process gas stream 1 may be passed through the adsorption vessels A or B in the adsorption mode in a direction from a top end to a bottom end, and the regeneration gas stream 5 may be passed through the adsorption vessels A or B in the regeneration mode in an opposite direction, i.e. in a direction from top to bottom, as shown in Figures 1 and 2. However, the present disclosure may also pertain to cases wherein the regeneration gas stream 5 is passed through the adsorption vessels A or B from the bottom end to the top end in the regeneration mode as this may help, as mentioned, to reduce corrosion. Embodiments as disclosed herein may include all possible flow directions, provided that a heating gas stream 4 is combined with the regeneration gas stream 5 within the adsorption vessels A or B before the regeneration gas stream leaves the adsorption vessels A or B.

## Claims

1. A method for adsorptively treating a process gas stream (1) comprising an adsorbable component using a plurality of adsorber vessels (A, B), each of the adsorber vessels (A, B) comprising an adsorbent therein and being alternatingly operated in an adsorption mode and a regeneration mode, wherein the method comprises, for each of the adsorber vessels (A, B):
passing the process gas stream (1) through the adsorption vessel (A, B) in the adsorption mode,
passing a regeneration gas stream (2) through the adsorption vessel (A, B) in the regeneration mode,
forming a heating gas stream (4) and combining the heating gas stream (4) with the regeneration gas stream (2) within the adsorption vessel (A, B) in the regeneration mode.

2. The method according to claim 1, wherein the regeneration gas stream (2) and the heating gas stream (4) are formed from a part of the process gas stream (1) downstream of the adsorption vessels (A, B).

3. The method according to claim 1 or 2, wherein the adsorbable component is water and the process gas stream (1) further comprises at least one non-absorbable component selected from the group of nitrogen, oxygen, hydrogen, one or more hydrocarbons, carbon monoxide, carbon dioxide or combinations thereof.

4. The method according to any one of the preceding claims, wherein said forming the heating gas stream (4) and combining the heating gas stream (4) with the regeneration gas stream (2) is performed only in a phase of the regeneration mode in which a temperature at or adjacent to an end of the adsorption vessels (A, B) at which the regeneration gas stream (2) leaves the adsorption vessels (A, B) is determined to be below a threshold temperature.

5. The method according to claim 4, wherein the threshold temperature is a temperature in a range from 80 to 100 or 85 to 96 °C.

6. The method according to any one of the preceding claims, wherein gas used to form the regeneration gas stream (2) and the heating gas stream (4) or a part thereof is heated by using a regeneration gas heater (R).

7. The method according to any one of the preceding claims, wherein the heating gas stream (4) is increased in its amount and/or in its temperature during at least a part of the regeneration mode.

8. The method according to any one of the preceding claims, wherein said combining the heating gas stream (4) with the regeneration gas stream (2) is performed in a space of the adsorber vessels (A, B) downstream of an adsorbent bed.

9. The method according to any one of the preceding claims, wherein said apparatus (100) contains at least one metallic component formed by a material other than a stainless steel which is contacted by the regeneration gas stream (2) and the heating gas stream (4) downstream of the adsorber vessels.

10. The method according to any one of the preceding claims, wherein, at each point of time, one of the adsorber vessels (A, B) is operated in the adsorption mode.

11. The method according to any one of the preceding claims, wherein the heating gas stream (4) is supplied to an inner space of the adsorber vessels (A, B) using a plurality of injection lances (207) comprising a plurality of openings (208), each of the injection lances (207) being arranged at an angle with respect to a longitudinal axis (210) of the adsorber vessels (A, B).

12. An apparatus (100) for adsorptively treating a process gas stream (1) comprising an adsorbable component, the apparatus (100) comprising a plurality of adsorber vessels (A, B), each of the adsorber vessels (A, B) comprising an adsorbent therein and being configured alternatingly operated in an adsorption mode and a regeneration mode, wherein the apparatus (100) is configured, for each of the adsorber vessels (A, B) to:
pass the process gas stream (1) through the adsorption vessel (A, B) in the adsorption mode,
pass a regeneration gas stream (2) through the adsorption vessel (A, B) in the regeneration mode,
form a heating gas stream (4) and combine the heating gas stream (4) with the regeneration gas stream (2) within the adsorption vessel (A, B) in the regeneration mode.

13. The apparatus (100) according to claim 12, configured to perform a method according to any one of claims 1 to 11.
